(19) Europäisches Patentamt
European Patent Office
Office européen des brevets

(11) Publication number : 0 113 507 B2

# (12) NEW EUROPEAN PATENT SPECIFICATION

(45) Date of publication of the new patent specification : 05.01.94 Bulletin 94/01

(51) Int. Cl.$^5$ : C08G 63/91, C08G 18/42, C08G 18/32, C08G 18/65, C08G 18/00

(21) Application number : 83306672.3

(22) Date of filing : 02.11.83

## (54) Process of preparation of aromatic polyols and rigid polyurethane and polyisocyanurate foams obtainable therefrom.

(30) Priority : 22.11.82 US 443779
22.11.82 US 443778

(43) Date of publication of application :
18.07.84 Bulletin 84/29

(45) Publication of the grant of the patent :
16.09.87 Bulletin 87/38

(45) Mention of the opposition decision :
05.01.94 Bulletin 94/01

(84) Designated Contracting States :
DE FR GB IT SE

(56) References cited :
EP-A- 0 006 685
EP-A- 0 044 969
EP-A- 0 086 882
DD-A- 146 826
DE-A- 1 795 497

(56) References cited :
DE-A- 3 131 203
GB-A- 882 603
GB-A- 1 475 541
US-A- 4 048 104
US-A- 4 137 265
US-A- 4 166 896
US-A- 4 223 068
US-A- 4 237 238

(73) Proprietor : ARCO Chemical Technology, L.P.
3 Christina Centre, Suite 902, 201 N. Walnut Street
Wilmington, Delaware 19801 (US)

(72) Inventor : Brennan, Michael Edward
6409 Shoal Creek Blvd.
Austin Texas 78757 (US)

(74) Representative : Cropp, John Anthony David et al
MATHYS & SQUIRE 10 Fleet Street
London, EC4Y 1AY (GB)

EP 0 113 507 B2

## Description

The invention relates to polyols for rigid polyurethane foams and more particularly relates to such aromatic polyester polyols which are made from the waste streams of terephthalic acids, dibasic acids and alkylene glycols.

It is known to prepare foam from polyurethanes by the reaction of a polyisocyanate, a polyol and a blowing agent such as a halogenated hydrocarbon, water or both, in the presence of a catalyst. One particular area of polyurethane technology is based upon rigid polyurethane foams.

The art is replete with a wide variety of polyols useful as one of the main components in preparing polyurethanes such as polyurethane foams. As an example, US-A-2 965 615 suggests use of copolymers of alkenyl-substituted aromatic compounds such as styrene, and ethylenically unsaturated monohydric alcohols such as allyl alcohol as a useful resinous polyol in urethane production. Also disclosed as useful polyol sources are alkoxylated reaction products of the above co-polymers.

Further, US-A-4 094 828 describes how a polyol combination comprising a co-polymer of allyl alcohol and styrene and a polyether polyol provides for rigid polyurethane foams possessing unusual dimensional stability and heat distortion properties. Amino polyols may be modified with epoxy resin and alkylene oxides according to the invention disclosed in US-A-4 309 532. These modified polyols produce rigid polyurethane foams that have higher heat distortion temperatures and better low temperature properties than foams made with polyols not modified in such a fashion.

Rigid foams generally have good insulative properties and are thus desirable for use in building insulation. As with all building materials, it is desirable to provide rigid foams that are as fire resistant as possible. One approach to this goal is to modify the polyol.

Polyisocyanurate foams are a type which are considered to be fire resistant and show low smoke evolution on burning. However, polyisocyanurate foams tend to be brittle or friable. Various types of polyols have been devised to lower the foam friability, but what frequently happens is that the fire and smoke properties of the polyisocyanurate foam deteriorate. Thus, a fine balance exists between the amount and type of polyol one adds to a polyisocyanurate foam formulation in order to maintain maximum flame and smoke resistance while at the same time reach an improvement in foam friability. US-A-4 039 487 and US-A-4 092 276 describe attempts at this fine balance, although each has its disadvantages.

Scrap polyalkylene terephthalate, such as polyethylene terephthalate (PET) is known to be incorporated into polyurethanes. For example, US-A-4 048 104 relates that polyisocyanate pre-polymers for use in polyurethane products may be prepared by combining an organic polyisocyanate with polyols which are the hydroxyl-terminated digestion products of waste polyalkylene terephthalate polymers and organic polyols. A polyol ingredient which is the digestion product of polyalkylene terephthalate residues or scraps digested with organic polyols is also described in US-A-4 223 068. Another case where terephthalic acid residues are employed is outlined in US-A-4 246 365 where polyurethanes are made from polyesters containing at least two hydroxyl groups and terephthalic acid residues.

More relevant to the compounds of this invention is the solution proposed in US-A-4 237 238. In this patent, a polyol mixture is prepared by the transesterification of a residue from the manufacture of dimethyl terephthalate with a glycol, which is then used to produce polyisocyanurate foams having a combination of a high degree of fire resistance with low smoke evolution, low foam friability and high compressive strength. The preparation of such a polyol mixture (from ethylene glycol and dimethyl terephthalate esterified oxidate residue) is described in US-A-3 647 759. J. M. Hughes and John Clinton, in the Proceedings of the S.P.I. 25th Annual Urethane Division Technical Conference, Scottsdale, Arizona (October 1979), describe other foams prepared from the polyols of US-A-3 647 759.

Another type of polyisocyanurate foam employs a polyol blend using both amide diols and primary hydroxyl polyols to give a foam having a high reaction exotherm, making it particularly suited to the preparation of polyisocyanurate foam laminates, according to US-A-4 246 364.

There is still a need for a rigid polyurethane foam that has a high flame resistance. Part of the problem with the polyols of US-A-3 647 759 is that they are not very compatible with trichlorofluoromethane, the gas entrapped in closed-cell rigid foams, which accounts for the excellent insulating properties of these foams.

Finally EP-A-0044969 discloses polyester polyols obtained from a reaction of diols with an admixture of succinic, glutaric and adipic acids; the polyester polyol then being used in a polyurethane producing reaction.

The present invention provides a method for producing a mixture of aromatic polyols having hydroxyl and ester functionalities characterized in that

a) a waste dibasic acid stream which comprises at least one acid selected from glutaric acid, succinic acid or adipic acid, said stream also containing nitric acid, copper and vanadium as impurities is esterified with an alkylene glycol to produce a polyester polyol, and

b) a terephthalic ester waste stream is transesterified with the polyester polyol reaction product from step (a).

In one embodiment of the invention, the terephthalic ester waste stream is recycled polyethylene terephthalate, and both steps (a) and (b) are conducted in the absence of a catalyst.

The present invention also provides methods for producing rigid polyurethane and polyisocyanurate foams by reacting polyols, produced as described above, with an organic polyisocyanate, in the presence of a blowing agent, and an appropriate catalyst for polyurethane or polyisocyanurate formation.

In general, it has been discovered that rigid foams may be made using the mixture of aromatic polyester polyols of this invention either alone or as polyol extenders together with other polyols. In addition, such a polyol mixture is compatible with the trichlorofluoromethane blowing agent. The novel aromatic polyester polyol mixtures are made by using a terephthalic acid residue. This may be any waste or scrap residue from the manufacture of terephthalic acid, dimethyl terephthalate, polyethylene terephthalate and the like. The residue must contain compounds which have the moiety

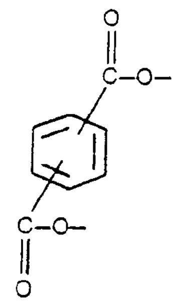

One such suitable residue is the dimethyl terephthalate (DMT) residue described in US-A-3 647 759. However, the co-reactant is not ethylene glycol as in US-A-3 647 759, but rather a polyester polyol produced by the esterification of a dibasic acid with an alkylene glycol or an alkylene glycol waste stream. The result is a novel mixture of aromatic polyols having ester functionalities of low average hydroxyl number and surprisingly low viscosity.

The term "DMT residue" refers to the purged residue which is obtained during the manufacture of DMT in which p-xylene is oxidized and the crude oxidation product is then esterified with methanol to yield the desired product in a reaction mixture along with a complex mixture of by-products. The desired DMT is removed from the reaction mixture with the volatile methyl p-toluate by-product by distillation leaving a residue. The DMT and methyl p-toluate are separated. Some of the residue is purged from the process while the remainder of the residue and the methyl p-toluate are recycled for oxidation. It is this purged residue which is reacted herein to yield useful polyester polyol products.

U.S. Patent 3,647,759 describes in detail the residue set forth above and characterizes its properties. Residues from the manufacture of polyethylene terephthalate would also be expected to be useful in making polyols by this process.

These DMT residues may contain DMT, substituted benzenes, polycarbomethoxy diphenyls, benzyl esters of the toluate family, dicarbomethoxy fluorenone, carbomethoxy benzocoumarins and carbomethoxy polyphenyls. The substituted benzenes, dicarbomethoxy fluorenone and carbomethoxy benzocoumarins are also present in small amounts. Dimethyl terephthalate may be present in amounts ranging from 6 to 65% of the DMT residue. Hercules, Inc., Wilmington, Delaware, sells these DMT residues under the tradename of TERATE® 1.1. Hercules also sells TERATE® 200 series resins which are DMT resins modified with a glycol as seen in US-A-4. -237 238 and US-A-3 647 759. Similar DMT residues having a different composition but still containing the aromatic, esters and acids are also sold by DuPont and others.

Useful novel aromatic polyol mixtures may be made with polyethylene terephthalate (PET) in place of the DMT residue. The reactions would proceed as usual and an aromatic polyol having hydroxyl and ester functionalities would result.

In another embodiment of the invention the novel aromatic polyester polyol mixtures are made by using a recycled polyethylene terephthalate (PET). This may be any scrap residue from old polyethylene terephthalate.

Generally, the scrap or recycled polyethylene terephthalate may be in any particulate form. A frequently seen form is fragmentised soft drink bottles which appear as clear or coloured chips. Polyethylene film can also be recycled. Any chopping or pulverising process which produces small bits of solid PET from the larger,

waste recycled article would be appropriate to produce scrap PET useful herein. Sometimes the scrap PET is mixed with a solvent to make a kind of slurry. While scrap PET slurry could be used in the method of this invention, the recycled PET chips without the solvent is also useful.

The polyester polyol with which the terephthalic acid residue is reacted is produced by the esterification of a waste dibasic acid stream as noted before. Dibasic acids are those acids which have two displaceable hydrogen atoms. Especially preferred waste streams are the residues from adipic acid manufacture which contain portions of each of the three acids (succinic, glutaric and adipic) listed above. It is necessary that the acids be dibasic so that polymer chains can be formed upon reaction with the glycol.

Preferably, the alkylene glycol has the formula

$$HO-(CH_2\underset{\displaystyle R}{\underset{|}{C}}HO)_n-H$$

where R is hydrogen or lower alkyl of one to four carbon atoms and n is from 1 to 3. Glycols which meet this definition are ethylene glycol, propylene glycol (1,2-propylene glycol), diethylene glycol (DEG), dipropylene glycol, and triethylene glycol (TEG).

The proportions of the reactants should be such as to give a resulting mixture of aromatic polyester polyols which have an average OH (hydroxyl) number within the desired range of about 100 to 400. The saponification number of the terephthalic acid residue (a measure of transesterification sites) should be considered in selecting proportions. Preferably the approximate equivalents ratio of terephthalic acid residue to polyester polyol reaction product should be from 1:1 to 1:3. What actually forms the "polyol" of this invention is a mixture of polyols having ester functions, even though the mixture is sometimes referred to as a singular "polyol".

In the embodiment using recycled polyethylene terephthalate and no catalyst, the saponification number of the scrap polyethylene terephthalate (a measure of transesterification sites) should be considered in selecting proportions. One PET unit has a molecular weight of 192.2. Preferably the approximate mole ratio of scrap polyethylene terephthalate to dibasic acid to alkylene glycol may be about 1:1:2. These proportions could vary 5% in either direction.

The polyester polyol which results from the reaction of the waste dibasic acid stream and an alkylene glycol may be a diester diol. Such a diol may be defined by the formula

$$[HO(CH_2)_2O(CH_2)_2O\overset{\displaystyle O}{\overset{\|}{C}}]_2(CH_2)_x \qquad (I)$$

where x is 2 to 4.

Generally, both reactions need heat between ambient and about 300°C to proceed.

In the non-catalysed embodiment using recycled polyethylene terephthalate, the temperature for both steps should preferably be from 140 to 220°C. The pressure in this embodiment can be atmospheric, sub-atmospheric or autogenous.

In other embodiments, the temperature for both steps should preferably be from 160 to 240°C, and the pressure can be atmospheric or subatmospheric. The polyol should have a hydroxyl number in the range of 100 to 400, with an especially preferred hydroxyl number range of 125 to 300.

These mixtures can serve as polyol extenders when they are blended with conventional polyols for use in polyurethane foams. The polyols of this invention can also be used alone to prepare isocyanurate foams.

There is good compatibility of the polyols of this invention with trichlorofluoromethane. Trichlorofluoromethane, sold under the tradename FREON® R11B, a conventional blowing agent, is the gas entrapped in closed-cell rigid foams which accounts for the excellent insulating properties of these foams.

The second constituent of the overall polyol combination found particularly useful in preparing rigid polyurethane foams is a polyether polyol having a hydroxyl number of 200-800. Usually the polyether polyol comprises 0-95 per cent by weight of the total polyol combination weight. Preferred polyether polyols of this type are the reaction products of a polyfunctional active hydrogen initiator and propylene oxide, ethylene oxide or mixed propylene oxide and ethylene oxide. The polyfunctional active hydrogen initiator most preferably has a functionality of 2-8.

A wide variety of initiators may be alkoxylated to form useful polyether polyols. Thus, for example, polyfunctional amines and alcohols of the following type may be alkoxylated: monoethanolamine, diethanolamine,

triethanolamine, ethylene glycol, polyethylene glycol, propylene glycol, polypropylene glycol, glycerine, sorbitol, and trimethylolpropane, sucrose and alphamethyl glucoside.

Such above amines or alcohols may be reacted with an alkylene oxide such as ethylene oxide, propylene oxide, or mixed ethylene oxide and propylene oxide using techniques known to those skilled in the art. Thus, for example, the reaction of alkylene oxide with initiators of this type is set forth in US-A-2 948 757 and US-A-3 000 963. Essentially such alkoxylations are carried out in the presence of a basic catalyst at a temperature sufficient to sustain the reaction. The hydroxyl number which is desired for the finished polyol would determine the amount of alkylene oxide used to react with the initiator. As noted above, the polyether polyols useful here have a hydroxyl number ranging from about 200 to about 800. The reaction mixture is then neutralized and water and excess reactants are stripped from the polyol. The polyether polyol may be prepared by reacting the initiator with propylene oxide or ethylene oxide, or by reacting the initiator first with propylene oxide followed by ethylene oxide or vice versa in one or more sequences to give a so-called block polymer chain or by reacting the initiator at once with propylene oxide and ethylene oxide mixture to achieve a random distribution of such alkylene oxides.

Especially preferred as the second polyol constituent are the nitrogen-containing polyether polyols described in US-A-3 297 597 and US-A-4 137 265. These particularly preferred polyols are marketed by Texaco Chemical Company as THANOL® R-350-X and THANOL® R-650-X polyols. These polyols are prepared by reacting from 2 to 3 moles of propylene oxide with one mole of the Mannich reaction product of a mole of phenol or nonphenol with one or two moles of diethanolamine.

The final polyol combination more preferably comprises 0-95 per cent by weight of said polyether polyol and 100-5 per cent by weight of aromatic polyester polyol. Although the aromatic polyols of this invention may be used alone, it is preferred that they be present in an amount of from 30 to 70 weight per cent of the polyol blend. The polyol combination in many instances has a total hydroxyl number ranging from about 200 to about 600. A preferred range is a hydroxyl number of from 300 to 500.

Any aromatic polyisocyanate may be used in the practice of the instant invention. Typical aromatic polyisocyanates include m-phenylene diisocyanate, p-phenylene diisocyanate, polymethylene polyphenylisocyanate, 2,4-toluene diisocyanate, 2,6-tolylene diisocyanate, dianisidine diisocyanate, bitolylene diisocyanate, naphthalene-1,4-diisocyanate, diphenylene-4,4'-diisocyanate, aliphatic-aromatic diisocyanates, such as xylylene-1,4-diisocyanate, xylylene-1 ,2-diisocyanate, xylylene-1,3-diisocyanate, bis(4-isocyanatophenyl)methane, bis(3-methyl-4-isocyanatophenyl)methane, and 4,4'-diphenylpropane diisocyanate.

Greatly preferred aromatic polyisocyanates used in the practice of the invention are methylene-bridged polyphenyl polyisocyanate mixtures which have a functionality of from about 2 to about 4. These latter isocyanate compounds are generally produced by the phosgenation of corresponding methylene bridged polyphenyl polyamines, which are conventionally produced by the reaction of formaldehyde and primary aromatic amines, such as aniline, in the presence of hydrochloric acid and/or other acidic catalysts. Known processes for preparing the methylene-bridged polyphenyl polyamines and corresponding methylene-bridged polyphenyl polyisocyanates therefrom are described in the literature and in many patents; for example, US-A-2 683 730; US-A-2 950 263; US-A-3 012 008; US-A-3 344 162; and US-A-3 362 979.

Most preferred methylene-bridged polyphenyl polyisocyanate mixtures used herein contain from about 20 to about 100 weight per cent methylene diphenyl diisocyanate isomers with the remainder being polymethylene polyphenyl diisocyanates having higher functionalities and higher molecular weights. Typical of these are polyphenyl polyisocyanate mixtures containing about 20 to 100 weight per cent methylene diphenyl polyisocyanate isomers, of which 20 to about 95 weight per cent thereof is the 4,4'-isomer with the remainder being polymethylene polyphenyl polyisocyanates of higher molecular weight and functionality that have an average functionality of from about 2.1 to about 3.5. The isocyanate mixtures are known commercially available materials and can be prepared by the process described in US-A-3 362 979.

In the production of rigid polyurethane foams in the practice of the invention, other known additives are necessary. One such constituent is the blowing agent. Some examples of such material are trichloromonofluoromethane, dichlorodifluoromethane, dichloromonofluoromethane, 1,1-dichloro-1-fluoroethane, 1,1-difluoro-1,2,2-trichloroethane, and chloropentafluoroethane. Other useful blowing agents include low-boiling hydrocarbons such as butane, pentane, hexane, and cyclohexane. See US-A-3 072 582, for example. The polyols of this invention are quite compatible with fluorocarbon blowing agents unlike some of the prior art polyols which are also made from DMT residues.

Surfactant agents, better known as silicone oils, are added to serve as a cell stabilizer. Some representative materials are sold under the names of SF-1109, L-520, L-521 and DC-193 which are, generally, polysiloxane polyoxyalkylene blocked co-polymers, such as those disclosed in US-A-2 834 748; US-A-2 917 480; and US-A-2 846 458, for example.

Should fire retardancy be required for the polyurethane foam, two types of fire retardants are available;

those that are incorporated by mere mechanical mixing and those that become chemically bound in the polymer chain. Representative of the first type are tris(chloroethyl)phosphate, tris(2,3-dibromopropyl)phosphate, diammonium phosphate, various halogenated compounds and antimony oxide. Representative of the chemically bound type are chlorendic acid derivatives, and various phosphorous-containing polyols.

The catalysts which may be used to make the foams of this invention are well known. There are two general types of catalyst, tertiary amines and organometallic compounds. Examples of suitable tertiary amines, used either individually or in mixture, are the N-alkylmorpholines, N-alkylalkanolamines, N,N-dialkylcyclohexylamines and alkylamines where the alkyl groups are methyl, ethyl, propyl, butyl, etc. Examples of specific tertiary amine catalysts useful in this invention are triethylenediamine, tetramethylethylenediamine, triethylamine, tripropylamine, tributylamine, triamylamine, pyridine, quinoline, dimethyl-piperazine, dimethylhexahydroaniline, piperazine, N-ethyl-morpholine, 2-methylpiperazine, dimethylaniline, nicotine, dimethylaminoethanol, tetramethylpropanediamine and methyl-triethylenediamine. Useful organometallic compounds as catalysts include those of bismuth, lead, tin, titanium, iron, antimony, uranium, cadmium, cobalt, thorium, aluminum, mercury, zinc, nickel, cerium, molybdenum, vanadium, copper, manganese, zirconium. Some examples of these metal catalysts include bismuth nitrate, lead 2-ethylhexoate, lead benzoate, lead oleate, dibutyltin dilaurate, tributyltin, butyltin trichloride, stannic chloride, stannous octoate, stannous oleate, dibutyltin di(2-ethylhexoate), ferric chloride, antimony trichloride, antimony glycolate, tin glycolates. Selection of the individual catalysts and proportions to use in the polyurethane reaction are well within the knowledge of those skilled in the art, and an amine and organometallic compound are often used together in the polyurethane reaction.

The rigid polyurethane foams prepared here can be made in one step by reacting all the ingredients together at once (one-shot process) or the rigid foams can be made by the so-called "quasi-prepolymer method." In accordance with this method, a portion of the polyol component is reacted in the absence of a catalyst with the polyisocyanate component in proportion so as to provide from about 20 per cent to about 40 per cent of free isocyanato groups in the reaction product, based on the polyol. To prepare foam, the remaining portion of the polyol is added and the two components are allowed to react in the presence of a catalyst and other appropriate additives such as blowing agents, foam stabilizing agents, fire retardants, etc. The blowing agent, the foam stabilizing agent, the fire retardant, etc., may be added to either the prepolymer or remaining polyol, or both, prior to the mixing of the component, whereby at the end of the reaction a rigid polyurethane foam is provided.

In a preferred embodiment the amount of polyol combination is used such that the isocyanato groups are present in the foam in at least an equivalent amount, and preferably in slight excess, compared with the free hydroxyl groups. Preferably, the ingredients will be proportional so as to provide for about 1.05 to about 8.0 mole equivalents of isocyanato groups per mole equivalent of hydroxyl groups.

The invention will be illustrated further with respect to the following specific examples, which are given by way of illustration and not given as limitations on the scope of this invention. The synthesis of the polyols of this invention will be presented along with examples of how these polyol mixtures are used as polyol extenders to prepare foams.

The polyol extenders of this invention will be compared with some commercial polyol extenders. Hercules, Inc., Wilmington, Delaware, sells dimethyl terephthalate (DMT) residues under the tradename of TERATE® 101. Hercules also sells TERATE® 200 series resins which are DMT resins modified with a glycol as seen in US-A-4 237 238 and US-A-3 647 759.

*Esterifications of Waste Dibasic Acid Streams*

Example I

Diethylene Glycol (DEG)

A 2-liter three-neck round bottom flask, equipped with a thermometer (Therm-O-Watch), magnetic stirring bar, nitrogen inlet, distillation head with water cooled condenser and a tared receiver was charged with 521.8 g (4.04 moles) of DuPont solid dibasic acid (DBA; 56% glutaric acid, 23% succinic acid, 20% adipic acid, ~1% organic nitrogen compounds, ~0.2% nitric acid; 862.22 acid no., 0.41% N, 0.82% water, 221 ppm copper and 162 ppm vanadium) and 857.2 g (8.08 moles) DEG. The whole was then stirred and heated under nitrogen. The reaction solution became homogeneous at 100°C. Distillate (132.0g; 98.1% water) was collected overhead at 85-99°C/144-215°C (pot)/1 atmosphere (101.3 kPa) over 3-2/3 hours. The bottoms product (1244.0 g), a dark mobile liquid, was recovered after cooling under nitrogen to room temperature. Total recovery was 99.78%. Proton nuclear magnetic resonance spectra confirmed the product structure to be a diester diol of formula (I). The product analyzed as follows

| | |
|---|---|
| Hydroxyl number | 368 |

| | |
|---|---|
| Acid number | 26.12 |
| Saponification number | 342.06 |
| Water, % | 0.83 |
| Nitrogen, % | 0.07 |
| Viscosity, at 25°C | 165 mPu.s. |
| Copper, ppm | 47.2 |
| Vanadium, ppm | 27.3 |

Prior art references report hydroxyl numbers of 327 (viscosity, 210 cp mPa.s @ 25°C) and 365 ± 5 for a product prepared by tetraoctyl titanate catalyzed transesterification of dimethyl glutarate with DEG (150-225°C, 126 hours), see US-A-4 048 104.

Example II

Glycol Residue (DEG, TEG, etc.)

As in the previous reaction, 537.5 g (4.16 moles) dibasic acid (DBA) was reacted with 1085.8 g (8.32 moles) glycol residue (Texaco Chemical; 860 hydroxyl number, 1.65% water; molecular weight average of 130.5). In this case, a homogeneous reaction solution was obtained at 90°C. Distillate (160.0 g; 98.1% water) was collected overhead at 66-115°C/151-215°C (pot)/1 bar over 4-1/6 hours. Product (1458.5 g) was again a dark, mobile liquid. Total recovery was 99.7%. Product structure was shown to be a diester diol by nuclear magnetic resonance analysis. The product analyzed as follows:

| | |
|---|---|
| Hydroxyl number | 330 |
| Acid number | 13.02 |
| Saponification number | 304.24 |
| Water, % | 0.65 |
| Viscosity, at 25°C | 323 mPa.s. |
| Copper, ppm | 20.2 |
| Vanadium, ppm | 28.1 |

Example III

Transesterification of Dimethylterephthalate (DMT) - High Boiling Residue (HBR)

DMT-HBR (DuPont) is the residue stream available from DMT manufacture. It consists of 50--65% DMT, 2-6% monomethyl terephthalate, 0-3% terephthalic acid, 30-40% of the methyl and benzyl esters of benzene di- and tricarboxylic acids and biphenyl di- and tricarboxylic acids in addition to substituted fluorenone, benzocoumarin and various monofunctional derivatives. The sample analyzed as follows:

| | |
|---|---|
| Saponification number | 553 |
| Acid number | 21 |
| Ash, wt.% | 0.19 |
| Manganese, wt.% | 0.15 |
| Cobalt, ppm | 424 |
| Phosphorus, ppm | 313 |
| Iron, ppm | 197 |
| Nickel, ppm | 130 |

Example IV

DMT-HBR/DBA-DEG

A 1-liter three-neck round bottom flask, equipped with a thermometer (Thermo-O-Watch), mechanical stirrer, nitrogen inlet, distillation head with water cooled condenser, and a tared receiver, was charged with 180.5 g DMT-HBR from Example III (a black solid) and 500.0 g (1.64 moles) DBA-DEG diester diol (Example I, hydroxyl number 368). The whole was then stirred and heated under nitrogen. Distillate (43.6 g, 26.2% water and the remainder mostly methanol) was collected overhead at 91-66°C/204-240°C (pot)/1 bar over 3-2/3 hours. The bottom product (634.0 g), a dark mobile liquid, was recovered after cooling under nitrogen to room temperature. Total recovery was 99.57%. The product analyzed as follows:

| | |
|---|---|
| Hydroxyl number | 179 |
| Acid number | 3.91 |
| Saponification number | 432.88 |
| Water, % | 0.13 |

| | |
|---|---|
| Ash, % | 0.35 |
| Viscosity, at 25°C | 2,306 mPa.s. |
| Manganese, ppm | 304 |
| Cobalt, ppm | 382 |
| Iron, ppm | 121 |
| Copper, ppm | 26 |
| Vanadium, ppm | 28 |

Example V

DMT-HBR/DBA-GR

As in the previous reaction, 158.0g DMT-HBR from Example III was reacted with 488.0 g (1.44 moles) DBA-GR diester diol (Example 2, hydroxyl number 330). Distillate (40.7 g, 21.3% water and the remainder mostly methanol) was collected overhead at 70-95-61°C/192-240°C (pot)/1 bar over 3.0 hours. The product, a dark mobile liquid, analyzed as follows: (604.0 g; total recovery, 99.7%).

| | |
|---|---|
| Hydroxyl number | 132 |
| Acid number | 8.02 |
| Saponification number | 385.0 |
| Water, % | 0.12 |
| Ash, % | 0.54 |
| Viscosity, at 25°C | 5,598 mPa.s. |
| Manganese, ppm | 893 |
| Cobalt, ppm | 430 |
| Iron, Fe | 256 |
| Copper, ppm | 26 |
| Vanadium, ppm | 27 |

Example VI

Cleavage/Esterification of Polyethyleneterephthalate (PET) Still Bottoms or "Glycol Sludge" from American Enka

Analysis of these still bottoms gave the following results:

| | |
|---|---|
| Hydroxyl number | 501 |
| Saponification number | 367.54 |
| Acid number | 14.55 |
| Water, % | 0.88 |
| Ash, wt. % | 1.33 |
| Antimony, wt.% | 0.325 |
| Cobalt, ppm | 701 |

Example VII

Rohm & Haas PET Still Bottoms

Analysis of these still bottoms gave the following results:

| | |
|---|---|
| Hydroxyl number | 236 |
| Saponification number | 306 |
| Acid number | 3.0 |
| Ash, % | 0.6 |
| Antimony, wt.% | 0.75 |
| Phosphorus, ppm | 564 |

Example VIII

Process Utilizing Preformed Aliphatic Diester Diol

A 250-ml three-neck round bottom flask, equipped with a mechanical stirrer, thermometer (Therm-O-Watch), water cooled distillation head, $N_2$ inlet, and a tared receiver, was charged with 71.2 g "glycol sludge" (American Enka) and 96.9 g (0.32 mole) DBA-DEG from Example I; therefore, a reactant ratio of 1:1, basis hydroxyl number. The whole was then heated and stirred under a nitrogen atmosphere at atmospheric pressure. The reaction solution became homogeneous at 145°C. The reaction mixture was held at 200--240°C for 2.5 hrs; a small amount of distillate (3.2 g; 88.8% water) was collected at a head temperature of 71°C max. Product (164.0 g; 99.5% total recovery) analyzed as follows:

| | |
|---|---|
| Hydroxyl number | 412 |
| Acid number | 1.49 |
| Saponification number | 369.5 |
| Water, % | 0.15 |
| Viscosity, at 25°C | 630 mPa.s. |
| Antimony, wt.% | 0.13 |
| Cobalt, ppm | 407 |

Example IX

Procedure was the same as in Example VIII. There were used 104.0 g PET still bottoms (Rohm & Haas) and 66.7 g (0.22 mole) DBA-DEG from Example 1. Therefore, the ratio was 1:1 basis hydroxyl number. The reaction took 3.0 hours at 200-240°C to give a distillate: 2.2 g, product: 167.0 g (contains solids) and filtered product: 145.5 g with the following properties.

| | |
|---|---|
| Hydroxyl number | 310 |
| Acid number | 1.88 |
| Saponification number | 388.91 |
| Water, % | 0.12 |
| Viscosity, at 25°C | 1.281 mPa.s. |
| Antimony, wt. % | 0.12 |
| Phosphorus, ppm | 69 |

Example X

Same procedure as in Example VIII. There were used 95.1 g PET still bottoms (Rohm & Haas) and 95.6 g (0.26 mole) DBA-GR from Example II. Therefore, the ratio was 1:1, basis saponification number. The reaction took 5.5 hours at 200-240°C to give a distillate: 4.2 g (69.7% water), Product: 184.5 g (contains solids) and filtered product: 137.0 g with the following properties.

| | |
|---|---|
| Hydroxyl number | 236 |
| Acid number | 2.43 |
| Saponification number | 378.61 |
| Water, % | 0.15 |
| Viscosity, at 25°C | 2,588 mPa.s. |
| Antimony, ppm | 635 |
| Phosphorus, ppm | 109 |

Example XI

Same procedure as in Example VIII. There were used 86.3 g "glycol sludge" (American Enka) and 104.2 g (0.28 mole) DBA-GR from Example II. Therefore, the ratio was 1:1, basis saponification number. The reaction took 4.0 hrs. at 200-240°C to give a distillate: 8.0 g (87.5% water), product 179.5 g (98.4% total recovery) having the following properties.

| | |
|---|---|
| Hydroxyl number | 332 |
| Acid number | 1.87 |
| Saponification number | 422.08 |
| Water, % | 0.09 |
| Viscosity, at 25°C | 1,279 mPa.s. |
| Antimony, wt.% | 0.14 |
| Cobalt, ppm | 558 |

Example XII

One-Pot Process

A 1-liter three-neck round bottom flask, equipped with a mechanical stirrer, thermometer (Therm-O-watch), distillation head with water cooled condenser, $N_2$ inlet and a tared receiver, was charged with 292.5 g

(1.03 equiv., basis saponification number) "glycol sludge" (American Enka) from Example VI, 132.1 g (1.03 moles) Monsanto flaked AGS (14% adipic acid, 58% glutaric acid, 23% succinic acid,1% other dibasic acids, 1% monobasic acids, ~0.2% organic nitrogen compounds, 2% other organics, ~0.05% nitric acid; 874.07 acid no., 0.5% N, 0.74% water, 2.72 ppm copper and 567 ppm vanadium), and 218.4 g (2.06 moles) diethylene glycol (DEG). The whole was then stirred and heated under nitrogen. Distillate (57.0 g; 96.7% water) was collected overhead at 92-114-67°C/145-230°C (pot)/1 bar over 3.0 hours, the final hour of which was at 200-230°C. The bottoms product (583.0 g), a mobile dark liquid, was recovered after cooling under nitrogen to room temperature. Total recovery was 99.5%. Product analyzed as follows:

| | |
|---|---|
| Hydroxyl number | 428 |
| Acid number | 4.37 |
| Saponification number | 372.63 |
| Water, % | 0.16 |
| Viscosity, at 25°C | 637 mPa.s. |
| Cobalt, ppm | 562 |
| Antimony, wt.% | 0.155 |

Example XIII

As in the previous reaction, 284.2 g (1.0 equiv., basis saponification number) "glycol sludge" (American Enka from Example VI) was reacted with 128.3 g (1.0 mole) AGS flakes (Monsanto) and 261.0 g (2.0 moles) glycol residue (Texaco Chemical; 860 hydroxyl number; 1.65% water; molecular weight average of 130.5). In this case, distillate (63.0 g; 92.8% water) was collected overhead at 80-105-65°C/ 150-240°C (pot)/1 bar over 4.5 hours, the final two hours of which were at 205-240°C. Product (601.0 g, total recovery, 98.6%) a mobile dark liquid, analyzed as follows:

| | |
|---|---|
| Hydroxyl number | 375 |
| Acid number | 3.23 |
| Saponification number | 350.08 |
| Water, % | 0.06 |
| Viscosity, at 25°C | 1,115 mPa.s. |
| Cobalt, ppm | 554 |
| Antimony, wt.% | 0.1455 |

Preparation of Fire Retarded Rigid Polyurethane Foams

Rigid foams were prepared from 70:30 wt.% ratio polyol blends of THANOL® R-350-X or THANOL R-650-X with the new extenders of this invention and from TERATE 203 and CHEMPOL 30-2150. The polyols THANOL R-350-X and R-650-X are described in U.S. Patents 3,297,597 and 4.137,265, respectively. The formulation components were mixed at 2700 rpm and poured into either a 12.5 x 20 x 15 cm (200 g pour) or a 20 x 20 x 30 cm (600 g pour) open mold and allowed to rise. The resulting foams were allowed to stand at room temperature for at least three days before testing. Formulations and foam physical properties are listed below.

Example XIV

THANOL® R-350-X-Formulation

| Formulation, pbw | A | B | C | D |
|---|---|---|---|---|
| THANOL R-350-X (OH=534) | 26.1 | 26.6 | 25.5 | 26.4 |
| Polyol, Ex. III (OH=179) | 11.2 | — | — | — |
| Polyol, Ex. IV (OH=132) | — | 11.4 | — | — |
| TERATE® 203[1] (OH=318) | — | — | 10.9 | — |
| CHEMPOL[2] 30—2150 (OH=210) | — | — | — | 11.3 |
| FYROL PCF[3] | 5.0 | 5.0 | 5.0 | 5.0 |
| Water | 0.3 | 0.3 | 0.3 | 0.3 |
| FREON R-11B[4] | 13.0 | 13.0 | 13.0 | 13.0 |
| L-5420[5] | 0.5 | 0.5 | 0.5 | 0.5 |
| FOMREZ UL-32[6] | 0.01 | 0.01 | 0.01 | 0.01 |
| PAPI 27[7] or MONDUR MR[8] Index=1.15, 1.15, 1.10, 1.15 | 43.9 | 43.2 | 44.8 | 43.5 |
| Times, seconds, mixing | 12 | 12 | 10 | 9 |
| Times, seconds, cream | 17 | 15 | 15 | 17 |
| Times, seconds, gel | 59 | 61 | 57 | 67 |
| Times, seconds, tack free | 97 | 97 | 83 | 113 |
| Times, seconds, rise | 133 | 131 | 115 | 150 |
| Initial surface friability | None | None | None | None |
| Foam appearance | Good | Good | Good | Good |
| Physical Properties | | | | |
| Density, $Kg/m^3$ | 27.55 | 26.11 | 26.91 | 27.55 |
| K-factor | 0.124 | 0.120 | 0.110 | 0.124 |
| Compressive strength, MPa | | | | |
| with rise | 0.238 | 0.211 | 0.254 | 0.275 |
| against rise | 0.082 | 0.086 | 0.087 | 0.077 |
| Heat distortion, °C | 107 | 107 | 129 | 118 |
| % closed cells | 92.59 | 91.64 | 93.64 | 91.19 |

Example XIV (continued)

THANOL® R-350-X-Formulation

| Formulation, pbw | A | B | C | D |
|---|---|---|---|---|
| Friability, wt.% loss 10 min | 3.80 | 3.01 | 2.35 | 2.60 |
| ASTM 1692 Burn, cm/min (BHA) | 4.8 | 5.2 | 5.3 | 4.1 |
| Butler Chimney Test | | | | |
| Flame height, cm | >28 | >28 | >28 | >28 |
| Seconds to extinguish | 14.0 | 13.0 | 14.0 | 14.0 |
| Wt.% retained | 70.8 | 67.3 | 78.2 | 69.4 |

[1]A DMT resin modified with a glycol, sold by Hercules, Inc., described in U.S. Patents 4,237,238 and 3,647,759
[2] Reaction product of recycled PET, DEG and pure dimethyl glutarate sold by Freeman Chemical Co.
[3] Fire retardant sold by Stauffer Chemical Co.
[4] Trichlorofluoromethane
[5] A silicone surfactant sold by Union Carbide Corp.
[6] A tin catalyst sold by Witco Chemical Corp.
[7] A polymeric isocyanate sold by Upjohn
[8] A polymeric isocyanate sold by Mobay Chemical Corp.

Example XV

THANOL® R-650-X Formulation

| Formulation, pbw | E | F | G | H |
|---|---|---|---|---|
| THANOL R-350-X (OH=455) | 28.1 | 28.6 | 27.2 | 28.3 |
| Polyol, Example III (OH=179) | 12.0 | — | — | — |
| Polyol, Example IV (OH=132) | — | 12.3 | — | — |
| TERATE 203 (OH=318) | — | — | 11.7 | — |
| CHEMPOL 30—2150 (OH=210) | — | — | — | 12.1 |
| FYROL PCF | 5.0 | 5.0 | 5.0 | 5.0 |
| Water | 0.3 | 0.3 | 0.3 | 0.3 |
| FREON R-11B | 13.0 | 13.0 | 13.0 | 13.0 |
| L-5420 | 0.5 | 0.5 | 0.5 | 0.5 |
| FOMREZ UL-32 | 0.01 | 0.01 | 0.01 | 0.01 |
| PAPI 27 or MONDUR MR Index=1.15, 1.15, 1.10, 1.15 | 41.1 | 40.3 | 42.3 | 40.8 |
| Times, seconds, mixing | 9 | 9 | 10 | 8 |
| Times, seconds, cream | 14 | 13 | 12 | 17 |
| Times, seconds, gel | 55 | 50 | 50 | 65 |
| Times, seconds, tack free | 85 | 70 | 60 | 99 |
| Times, seconds, rise | 132 | 138 | 84 | 156 |
| Initial surface friability | None | None | None | None |
| Foam appearance | Good | Good | Good | Good |
| Physical Properties | | | | |
| Density, Kg/m³ | 29.47 | 29.64 | 28.52 | 30.12 |
| K-factor | 0.126 | 0.117 | 0.113 | 0.120 |
| Compressive strength, MPa | | | | |
| with rise | 0.224 | 0.217 | 0.240 | 0.280 |
| against rise | 0.085 | 0.079 | 0.086 | 0.080 |
| Heat distortion, °C | 102 | 103 | 138 | 110 |
| % Closed cells | 92.64 | 93.07 | 94.86 | 92.55 |
| Friability, wt.% loss, 10 min | 3.82 | 2.93 | 2.37 | 1.30 |
| ASTM 1692 Burn, cm/min (BHA) | 4.4 | 5.1 | 6.0 | 5.3 |
| Butler Chimney Test | | | | |
| Seconds to extinguish | 13.0 | 12.0 | 12.3 | 11.0 |
| Flame height, cm | >28 | >28 | 22.9 | >28 |
| Wt.% retained | 71.0 | 69.3 | 79.0 | 73.5 |

Example XVI

THANOL® R-350-X and R-650-X Formulations
(Comparative Examples)

| Formulation, pbw | I | C | D | J | G | H |
|---|---|---|---|---|---|---|
| THANOL R-350-X (OH=534) | 33.8 | 25.5 | 26.4 | — | — | — |
| THANOL R-650-X (OH=455) | — | — | — | 37.0 | 27.2 | 28.3 |
| TERATE 203 (OH=318) | — | 10.9 | — | — | 11.7 | — |
| CHEMPOL 30—2150 (OH=210) | — | — | 11.3 | — | — | 12.1 |
| FYROL PCF | 5.0 | 5.0 | 5.0 | 5.0 | 5.0 | 5.0 |
| Water | 0.3 | 0.3 | 0.3 | 0.3 | 0.3 | 0.3 |
| FREON R-11B | 13.0 | 13.0 | 13.0 | 13.0 | 13.0 | 13.0 |
| L-5420 | 0.5 | 0.5 | 0.5 | 0.5 | 0.5 | 0.5 |
| FOMREZ UL-32 | 0.01 | 0.01 | 0.01 | 0.01 | 0.01 | 0.01 |
| MONDUR MR (index=1.1, 1.1, 1.15) | 47.4 | 44.8 | 43.5 | 44.2 | 42.3 | 40.8 |
| Times, seconds, mixing | 10 | 10 | 9 | 8 | 10 | 8 |
| Times, seconds, cream | 26 | 15 | 17 | 12 | 12 | 17 |
| Times, seconds, gel | 66 | 57 | 67 | 51 | 50 | 65 |
| Times, seconds, tack free | 98 | 83 | 113 | 64 | 60 | 99 |
| Times, seconds, rise | 105 | 115 | 150 | 109 | 84 | 156 |
| Initial surface friability | None | None | None | None | None | None |
| Foam appearance | Very Good | Good | Good | Very Good | Good | Good |
| Physical Properties | | | | | | |
| Density, Kg/$m^3$ | 29.96 | 29.91 | 27.55 | 27.87 | 28.52 | 30.12 |
| K-factor | 0.118 | 0.110 | 0.124 | 0.118 | 0.113 | 0.120 |
| Compressive strength, MPa | | | | | | |
| with rise | 0.284 | 0.254 | 0.275 | 0.246 | 0.240 | 0.280 |
| against rise | 0.132 | 0.087 | 0.077 | 0.098 | 0.086 | 0.080 |
| Heat distortion, °C | 152 | 129 | 118 | 137 | 138 | 110 |
| % closed cells | 91.79 | 93.64 | 91.19 | 92.02 | 94.86 | 92.55 |
| Friability, wt.% loss, 10 min | 8.18 | 2.35 | 2.60 | 6.19 | 2.37 | 1.30 |
| ASTM 1692 Burn, cm/min (BHA) | 6.3 | 5.3 | 4.1 | 7.5 | 6.0 | |
| Butler Chimney Test | | | | | | |
| Flame height, cm | >28 | >28 | >28 | >28 | 22.9 | >28 |
| Seconds to extinguish | 19.0 | 14.0 | 14.0 | 14.0 | 12.3 | 11 |
| Wt.% retained | 59.7 | 78.2 | 69.4 | 63.9 | 79.0 | 73.5 |

Example XVII

THANOL® R-350-X Formulations
(Inventive Examples)

| Formulation, pbw | K | L | M | N | O | P |
|---|---|---|---|---|---|---|
| THANOL R-350-X (OH=534) | 24.0 | 24.7 | 24.85 | 25.55 | 24.6 | 25.1 |
| Polyol, Example VIII (OH=412) | 10.3 | — | — | — | — | — |
| Polyol, Example XI (OH=332) | — | 10.6 | — | — | — | — |
| Polyol, Example IX (OH=310) | — | — | 10.65 | — | — | — |
| Polyol, Example X (OH=236) | — | — | — | 10.95 | — | — |
| Polyol, Example XII (OH=428) | — | — | — | — | 10.6 | — |
| Polyol, Example XIII (OH=375) | — | — | — | — | — | 10.8 |
| FYROL PCF | 5.0 | 5.0 | 5.0 | 5.0 | 5.0 | 5.0 |
| Water | 0.3 | 0.3 | 0.3 | 0.3 | 0.3 | 0.3 |
| FREON R-11B | 13.0 | 13.0 | 13.0 | 13.0 | 12.5 | 12.5 |
| L-5420 | 0.5 | 0.5 | 0.5 | 0.5 | 0.5 | 0.5 |
| FOMREZ UL-32 | 0.01 | 0.01 | 0.01 | 0.01 | 0.01 | 0.01 |
| PAPI 27, index=1.15, 1.1 | 46.9 | 45.9 | 45.7 | 44.7 | 46.5 | 45.8 |
| Times, seconds, mixing | 8 | 8 | 8 | 8 | 6 | 6 |
| Times, seconds, cream | 11 | 11 | 10 | 11 | 12 | 13 |
| Times, seconds, gel | 41 | 45 | 43 | 56 | 36 | 44 |
| Times, seconds, tack free | 63 | 65 | 67 | 89 | 55 | 65 |
| Times, seconds, rise | 93 | 95 | 101 | 126 | 104 | 102 |
| Initial surface friability | None | None | None | None | None | None |
| Foam appearance | Good | Good | Good | Good | Good | Good |
| Physical Properties | | | | | | |
| Density, Kg/m$^3$ | 28.52 | 28.68 | 29.32 | 28.36 | 26.75 | 26.59 |
| K-factor | — | — | — | — | 0.120 | 0.128 |
| Compressive strength, MPa | | | | | | |
| with rise | 0.251 | 0.230 | 0.237 | 0.265 | 0.240 | 0.248 |
| against rise | 0.091 | 0.080 | 0.085 | 0.082 | 0.072 | 0.072 |
| Heat distortion, °C | 109 | 109 | 106 | 102 | 116 | 114 |
| % closed cells | 91.42 | 93.31 | 93.09 | 92.47 | 91.53 | 92.17 |
| Friability, wt.% loss, 10 min | 4.90 | 0.00 | 0.39 | 1.92 | 4.65 | 0.83 |
| ASTM 1692 Burn, cm/min (BHA) | — | — | — | — | 5.3 | 4.8 |
| Butler Chimney Test | | | | | | |
| Flame height, cm | — | — | — | — | >28 | >28 |
| Seconds to extinguish | — | — | — | — | 13 | 17 |
| Wt.% retained | — | — | — | — | 65.5 | 66.7 |

Example XVIII

THANOL © R-650-X Formulations
(Inventive Examples)

| Formulation, pbw | Q | R | S | T | U |
|---|---|---|---|---|---|
| THANOL R-350-X (OH=455) | 25.6 | 26.5 | 26.7 | 26.3 | 26.8 |
| Polyol, Ex. VIII (OH=412) | 11.0 | — | — | — | — |
| Polyol, Ex. XI (OH=332) | — | 11.3 | — | — | — |
| Polyol, Ex. IX (OH=310) | — | — | 11.4 | — | — |
| Polyol, Ex. XII (OH=428) | — | — | — | 11.3 | — |
| Polyol, Ex. XIII (OH=375) | — | — | — | — | 11.5 |
| FYROL PCF | 5.0 | 5.0 | 5.0 | 5.0 | 5.0 |
| Water | 0.3 | 0.3 | 0.3 | 0.3 | 0.3 |
| FREON R-11B | 13.0 | 13.0 | 13.0 | 12.5 | 12.5 |
| L-5420 | 0.5 | 0.5 | 0.5 | 0.5 | 0.5 |
| FOMREZ UL-32 | 0.01 | 0.01 | 0.01 | 0.01 | 0.01 |
| PAPI 27, index=1.15, 1.1 | 44.6 | 43.4 | 43.1 | 44.1 | 43.4 |
| Times, seconds, mixing | 6 | 6 | 8 | 4 | 4 |
| Times, seconds, cream | 10 | 12 | 12 | 10 | 10 |
| Times, seconds, gel | 40 | 43 | 46 | 36 | 37 |
| Times, seconds, tack free | 59 | 62 | 65 | 47 | 51 |
| Times, seconds, rise | 92 | 103 | 109 | 81 | 93 |
| Initial surface friability | None | None | None | None | None |
| Foam appearance | Good | Good | Good | Good | Good |
| Physical Properties | | | | | |
| Density, $Kg/m^3$ | 29.32 | — | 31.56 | 27.87 | 28.20 |
| K-factor | — | — | — | 0.121 | 0.123 |
| Compressive strength, MPa | | | | | |
| with rise | 0.242 | 0.257 | 0.233 | 0.248 | 0.248 |
| against rise | 0.093 | 0.095 | 0.084 | 0.069 | 0.072 |
| Heat distortion, °C | 102 | 101 | 99 | 111 | 108 |
| % closed cells | 92.31 | 94.11 | 93.03 | 92.69 | 91.87 |
| Friability, wt.% loss, 10 min | 3.77 | 0.36 | 0.00 | 2.14 | 5.08 |
| ASTM 1692 Burn, cm/min (BHA) | — | — | — | 5.0 | 4.7 |
| Butler Chimney Test | | | | | |
| Flame height, cm | — | — | — | >28 | >28 |
| Seconds to extinguish | — | — | — | 14 | 13 |
| Wt.% retained | — | — | — | 67.1 | 65.8 |

Example XIX

Preparation of Polyisocyanurate Foams

| Formulation, pbw | V | W | X |
|---|---|---|---|
| Polyol, Ex. IV (OH=179) | 26.5 | — | — |
| Polyol, Ex. V (OH=132) | — | 32.4 | — |
| CHEMPOL 30—2150 (OH=210) | — | — | 23.7 |
| Silicone DC-193 | 0.5 | 0.5 | 0.5 |
| FREON R-11B | 12.0 | 12.0 | 12.0 |
| DABCO TMR-2[1] | 1.5 | 1.5 | 1.5 |
| PAPI 27 or MONDUR MR Index=5.24 | 59.5 | 53.6 | 62.3 |
| Times, seconds, mixing | 6 | 6 | 3 |
| Times, seconds, cream | 9 | 7 | 15 |
| Times, seconds, gel | 21 | 50 | 18 |
| Times, seconds, tack free | 23 | 55 | 21 |
| Times, seconds, rise | 41 | 62 | 56 |
| Initial surface friability | None | None | None |
| Foam appearance | Good | Good | Good |
| Physical Properties | | | |
| Density, Kg/m$^3$ | 32.04 | 32.84 | 37.81 |
| K-factor | 0.128 | 0.124 | — |
| Compressive strength, MPa | | | |
| with rise | 0.249 | 0.212 | 0.331 |
| against rise | 0.077 | 0.077 | 0.151 |
| Heat distortion, °C | 216 | 178 | 224 |
| % closed cells | 92.20 | 92.70 | 91.90 |
| Friability, wt.% loss, 10 min | 23.30 | 8.05 | 10.40 |
| ASTM 1692 Burn, cm/min (BHA) | 3.6 | 3.8 | — |
| Butler Chimney Test | | | |
| Flame height, cm | 15.2 | 16.5 | — |
| Seconds to extinguish | 12.2 | 11.8 | — |
| Wt.% retained | 90.3 | 89.6 | — |

[1]A tertiary amine catalyst product of Air Products and Chemicals, Inc.

*Cleavage/Esterifications of Recycled PET*

Example XX

PET/DBA-DEG Diester Diol (Mole ratio = 1/1)

A 1-liter three-neck round bottom flask, equipped with a mechanical stirrer, thermometer (Therm-O-Watch), water cooled distillation head, nitrogen inlet and a tared receiver was charged with 232.0 g (1.2 equiv.) PET chips (green and clear from recycled soft drink bottles) and 368.0 g (1.2 moles of DBA-DEG diester diol from Example 1. The whole was then stirred and heated under a nitrogen atmosphere at 1 bar to 210°C over 1.0 hour and then held at 210-220°C for 6.0 hours. A small amount of distillate (3.9 g; expected 3.0 g water from Example 1) was collected during the total reaction time at 71-44°C/200-220°C (pot). The product (592.0 g), a dark, mobile liquid, was recovered after cooling to near room temperature under nitrogen. Total recovery was 99.3%. Analyses of product and the prior art product (dimethyl glutarate derived) follow:

| | Example XX | CHEMPOL 30—2150 |
|---|---|---|
| Hydroxyl number | 231 | 210 |
| Acid number | 4.45 | 1.76 |
| Saponification number | 438.09 | 431.33 |
| Water, % | 0.23 | 0.05 |
| Viscosity, at 25°C | 3,564 mPa.s | 3,529 mPa.s. |
| Copper, ppm | 18.1 | — |
| Vanadium, ppm | 25.3 | — |
| Titanium, ppm | — | 439 |

Example XXI

PET/DBA-GR Diester Diol (Mole ratio = 1/1)

As in the previous experiment, 232.0 g (1.2 equiv.) PET chips (green and clear) were reacted with 410.5 g (1.2 moles) DBA-GR diester diol from Example II. Reaction conditions were identical to the previous run. Results follow: Distillate: 6.0 g; 89.4% water (expected 2.7 g water from Example II). Product: 634.0 g, dark, mobile liquid. Total recovery: 99.6%. The product analyzed as follows:

| | |
|---|---|
| Hydroxyl number | 185 |
| Acid number | 6.10 |
| Saponification number | 398.65 |
| Water, % | 0.18 |
| Viscosity, at 25°C | 6,213 mPa.s. |
| Copper, ppm | 19.5 |
| Vanadium, ppm | 21.6 |

*One-Pot Process Examples*

Example XXII

PET/DBA/DEG (Mole ratio = 1/1/2)

As in the previous experiments (XX and XXI) a 2-liter flask was charged with 513.2 g (2.67 equiv.) PET chips (green and clear), 344.4 g (2.67 moles) of DBA and 565.8 g (5.33 moles) of DEG. The whole was then stirred and heated under a nitrogen atmosphere. Distillate 97.0 g; theor., 96.0 g; 99.7% water) was collected overhead at 96-50°C/136-220°C (pot)/1 bar over 7.7 hours, of which 5.5 hours were at 210-220°C. Product (1320.0 g), a dark and mobile liquid, was recovered as before. Total recovery was 99.6%. The product analysed as follows:

| | |
|---|---|
| Hydroxyl number | 231 |
| Acid number | 4.98 |
| Saponification number | 443.12 |
| Water, % | 0.15 |

| | |
|---|---|
| Viscosity, at 25°C | 3,115 mPa.s. |
| Copper, ppm | 22.5 |
| Vanadium, ppm | 21.5 |

Example XXIII

PET/AGS/Flashed Glycol (Mole ratio = 1/1/2)

Monsanto AGS flakes is a waste dicarboxylic acid stream similar to DuPont DBA. AGS typically contains 13-18% adipic acid, 55-59% glutaric acid, 22-24%, succinic acid, 0.2-1.4% other dibasic acids, 0.1-1.0% monobasic acids, 0.1-0.3% picric acid, 2-3% other organics, 0.01-0.2% nitric acid; analyzed for 874.07 acid number, 0.74% water, 0.51 % nitrogen 2.72 ppm copper and 567 ppm vanadium.

Texaco Chemical flashed glycol analyzed for 1.33% water and a hydroxyl number of 1070.5 and contained 14.2% EG, 59.5% DEG and 26.3% TEG, basis $^{13}C$ nuclear magnetic resonance analysis.

As in Examples XX to XXII, a 1-liter flask was charged with 288.3 g (1.5 equiv.) PET (Eastman scrap, class IIB white), 192.5 g (1.5 moles) AGS flakes and 314.4 g (3.0 moles) flashed glycol. The whole was then stirred and heated under a nitrogen atmosphere. Distillate (61.2 g.; 93.1% water) was collected overhead at 104-53°C/160-220°C (pot)/1 bar over 7.5 hours, of which 6.0 hours were at 210-220°C. Product (730.0 g) was a somewhat "murky" brown, mobile liquid. Total recovery was 99.5%. The product analyzed as follows:

| | |
|---|---|
| Hydroxyl number | 234 |
| Acid number | 3.66 |
| Saponification number | 441.14 |
| Water, % | 0.09 |
| Viscosity, at 25°C | 6,271 mPa.s. |
| Copper, ppm | 1.10 |
| Vanadium, ppm | 175 |
| Iron, ppm | 17.9 |

Preparation of Fire Retarded Rigid Polyurethane Foams

Rigid foams were prepared in the manner described above, immediately before Example XIV, using the polyols of Examples XX to XXII. Formulations and foam physical properties are listed below.

Example XXIV

THANOL R-350-X Formulations

| Formulation, pbw | A | B | C | D | E | F |
|---|---|---|---|---|---|---|
| THANOL R-350-X (OH=534) | 33.8 | 25.5 | 26.4 | 25.6 | 26.0 | 25.6 |
| TERATE 203 (OH=318) | — | 10.9 | — | — | — | — |
| CHEMPOL 30—2150 (OH=210) | — | — | 11.3 | — | — | — |
| Polyol, Ex. XX (OH=231) | — | — | — | 11.0 | — | — |
| Polyol, Ex. XXI (OH=185) | — | — | — | — | 11.2 | — |
| Polyol, Ex. XXII (OH=231) | — | — | — | — | — | 11.0 |
| FYROL PCF[1] | 5.0 | 5.0 | 5.0 | 5.0 | 5.0 | 5.0 |

Example XXIV (continued)

THANOL R-350-X Formulations

| Formulation, pbw | A | B | C | D | E | F |
|---|---|---|---|---|---|---|
| Water | 0.3 | 0.3 | 0.3 | 0.3 | 0.3 | 0.3 |
| FREON R-11B[2] | 13.0 | 13.0 | 13.0 | 13.0 | 13.0 | 13.0 |
| L-5420[3] | 0.5 | 0.5 | 0.5 | 0.5 | 0.5 | 0.5 |
| FOMREZ UL-32[4] | 0.01 | 0.01 | 0.01 | 0.01 | 0.01 | 0.01 |
| MONDUR MR[5] (index = 1.1, 1.1, 1.15) | 47.4 | 44.8 | 43.5 | — | — | — |
| PAPI 27[6] (index =1.15) | — | — | — | 44.6 | 44.0 | 44.6 |
| Times, seconds, mixing | 10 | 10 | 9 | 12 | 12 | 15 |
| Times, seconds, cream | 26 | 15 | 17 | 23 | 19 | 18 |
| Times, seconds, gel | 66 | 57 | 67 | 65 | 60 | 66 |
| Times, seconds, tack free | 98 | 83 | 113 | 102 | 102 | 115 |
| Times, seconds, rise | 105 | 115 | 150 | 115 | 120 | 153 |
| Initial surface friability | None | None | None | None | None | None |
| Foam appearance | Very Good | Good | Good | Good | Good | Good |
| **Physical Properties** | | | | | | |
| Density, Kg/m$^3$ | 29.96 | 26.91 | 27.55 | 27.55 | 26.75 | 27.55 |
| K-factor | 0.118 | 0.110 | 0.124 | 0.122 | 0.127 | 0.128 |
| Compressive str., MPa | | | | | | |
| with rise | 0.284 | 0.254 | 0.275 | 0.253 | 0.240 | 0.271 |
| against rise | 0.132 | 0.087 | 0.077 | 0.074 | 0.084 | 0.098 |
| Heat distortion, °C | 152 | 129 | 118 | 112 | 114 | 116 |
| % Closed cells | 91.79 | 93.64 | 91.19 | 95.01 | 92.60 | 91.50 |
| Friability, wt.% loss, 10 min | 8.18 | 2.35 | 2.60 | 1.80 | 0.42 | — |
| ASTM 1692 Burn, cm/min (BHA) | 6.3 | 5.3 | 4.1 | 5.1 | 5.3 | 4.1 |
| **Butler Chimney Test** | | | | | | |
| Flame height, cm | >28 | >28 | >28 | >28 | >28 | >28 |
| Seconds to extinguish | 19 | 14 | 14 | 12 | 21 | 15 |
| Wt.% retained | 58.7 | 78.2 | 69.4 | 69.8 | 54.3 | 68.1 |

[1] Fire retardant sold by Stauffer Chemical Co.
[2] Trichlorofluoromethane
[3] A silicon surfactant sold by Union Carbide Corp.
[4] A tin catalyst sold by Witco Chemical Corp.
[5] A polymeric isocyanate sold by Mobay Chemical Corp.
[6] A polymeric isocyanate sold by Upjohn Co.

Example XXV

THANOL R-650-X Formulations

| Formulation, pbw | G | H | I | J | K | L |
|---|---|---|---|---|---|---|
| THANOL R-650-X (OH=455) | 37.0 | 27.2 | 28.3 | 27.5 | 28.0 | 27.5 |
| TERATE 203 (OH=318) | — | 11.7 | — | — | — | — |
| CHEMPOL 30—2150 (OH=210) | — | — | 12.1 | — | — | — |
| Polyol, Ex. XX (OH=231) | — | — | — | 11.8 | — | — |
| Polyol, Ex. XXI (OH=185) | — | — | — | — | 12.0 | — |
| Polyol, Ex. XXII (OH=231) | — | — | — | — | — | 11.8 |
| FYROL PCF | 5.0 | 5.0 | 5.0 | 5.0 | 5.0 | 5.0 |
| Water | 0.3 | 0.3 | 0.3 | 0.3 | 0.3 | 0.3 |
| FREON R-11B | 13.0 | 13.0 | 13.0 | 13.0 | 13.0 | 13.0 |
| L-5420 | 0.5 | 0.5 | 0.5 | 0.5 | 0.5 | 0.5 |
| FOMREZ UL-32 | 0.01 | 0.01 | 0.01 | 0.01 | 0.01 | 0.01 |
| MONDUR MR (index = 1.1, 1.1, 1.15) | 44.4 | 42.3 | 40.8 | — | — | — |
| PAPI 27 (index =1.15) | — | — | — | 41.9 | 41.2 | 41.9 |
| Times (secs), mixing | 8 | 10 | 8 | 9 | 9 | 10 |
| Times (secs), cream | 12 | 12 | 17 | 17 | 16 | 14 |
| Times (secs), gel | 51 | 50 | 65 | 58 | 55 | 54 |
| Times (secs), tack free | 64 | 60 | 99 | 85 | 78 | 78 |
| Times (secs), rise | 109 | 84 | 156 | 105 | 95 | 121 |
| Initial surface friability | None | None | None | None | None | None |
| Foam appearance | Very Good | Good | Good | Good | Good | Good |
| **Physical Properties** | | | | | | |
| Density, KG/m$^3$ | 27.87 | 28.52 | 30.12 | 28.84 | 29.48 | 29.64 |
| K-factor | 0.118 | 0.113 | 0.120 | 0.118 | 0.119 | 0.112 |
| Compressive str., MPa | | | | | | |
| with rise | 0.246 | 0.240 | 0.280 | 0.261 | 0.281 | 0.303 |
| against rise | 0.098 | 0.086 | 0.080 | 0.075 | 0.086 | 0.085 |
| Heat distortion, °C | 137 | 138 | 110 | 108 | 102 | 100 |
| % Closed cells | 92.02 | 94.86 | 92.55 | 90.87 | 89.95 | 91.30 |
| Friability, wt.% loss, 10 min | 6.19 | 2.37 | 1.30 | 1.92 | 1.52 | — |
| ASTM 1692 Burn, cm/min (BHA) | 7.5 | 6.0 | 5.3 | 5.9 | 5.3 | 5.1 |
| **Butler Chimney Test** | | | | | | |
| Flame height, cm | >28 | 22.9 | >28 | >28 | >28 | >28 |
| Seconds to extinguish | 14 | 12.3 | 11 | 13 | 10 | 11 |
| Wt.% retained | 63.9 | 79.0 | 73.5 | 70.1 | 76.2 | 69.5 |

Example XXVI

Preparation of Polyisocyanurate Foams

The foams were prepared as in Examples XXIV and XXV. Formulations and foam physical properties are listed below.

| Formulation, pbw | M | N | O | P |
|---|---|---|---|---|
| CHEMPOL 30—2150 (OH=210) | 23.7 | — | — | — |
| Polyol, Ex. XX (OH=231) | — | 22.1 | — | — |
| Polyol. Ex. XXI (OH=185) | — | — | 25.9 | — |
| Polyol, Ex. XXII (OH=231) | — | — | — | 22.1 |
| Silicone DC-193 | 0.5 | 0.5 | 0.5 | 0.5 |
| FREON R-11B | 12.0 | 12.0 | 12.0 | 12.0 |
| DABCO TMR-2[1] | 1.5 | 1.5 | 1.5 | 1.5 |
| MONDUR MR (index = 5.2) | 62.3 | — | — | — |
| PAPI 27 (index = 5.2) | — | 63.9 | 60.1 | 63.9 |
| Times, seconds, mixing | 3 | 7 | 7 | 7 |
| Times, seconds, cream | 15 | 15 | 11 | 13 |
| Times, seconds, gel | 18 | 35 | 29 | 25 |
| Times, seconds, tack free | 21 | 38 | 37 | 30 |
| Times, seconds, rise | 56 | 65 | 57 | 55 |
| Initial surface friability | None | None | None | None |
| Foam appearance | Good | Fair | Good | Fair |
| Physical Properties | | | | |
| Density, Kg/m$^3$ | 37.81 | 31.72 | 29.96 | 31.40 |
| K-factor | — | 0.137 | 0.125 | 0.134 |
| Compressive strength, MPa | | | | |
| with rise | 0.331 | 0.187 | 0.258 | 0.241 |
| against rise | 0.151 | 0.093 | 0.074 | 0.095 |
| Heat distortion, °C | 224 | >225 | 213 | 220 |
| % Closed cells | 91.91 | 89.90 | 92.40 | 94.50 |
| Friability, wt.% loss, 10 min | 10.4 | 15.44 | 18.84 | 15.17 |
| ASTM 1692 Burn, cm/min (BHA) | — | 3.4 | 3.7 | 3.1 |
| Butler Chimney Test | | | | |
| Flame height, cm | — | 13.5 | 14.7 | 13.2 |
| Seconds to extinguish | — | 13.0 | 12.0 | 12.7 |
| Wt.% retained | — | 91.3 | 88.5 | 91.4 |

[1] A tertiary amine catalyst product of Air Products and Chemicals, Inc.

It may be readily seen from many of the examples that the polyol mixtures of this invention work as well as polyol extenders as do commercially available materials.

## Claims

1. A method for producing a mixture of aromatic polyols having hydroxyl and ester functionalities characterised in that
   a) a waste dibasic acid stream which comprises at least one acid selected from glutaric acid, succinic acid or adipic acid, said stream also containing nitric acid, copper and vanadium as impurities, is esterified with an alkylene glycol to produce a polyester polyol and
   b) a terephthalic ester waste stream is transesterified with the polyester polyol reaction product from the previous step.

2. A method according to claim 1 characterised in that the reactions are conducted at a temperature from 160 to 240°C and at a pressure of up to 1 bar.

3. A method according to claim 1 or 2 characterised in that the terephthalic ester waste stream is a residue from the manufacture of dimethyl terephtalate.

4. A method according to claim 3 characterised in that the dimethyl terephthalate residue contains dimethyl terephthalate and one or more by-products of substituted benzenes, polycarbomethoxy diphenyls, benzyl esters of the toluate family, dicarbomethoxy, fluorenone, carbomethoxy benzo-coumarins and carbomethoxy polyphenyls.

5. A method according to claim 1 or 2 characterised in that the terephthalic ester waste stream is a residue from the manufacture of polyethylene terephthalate.

6. A method according to claim 1 characterised in that the terephthalate ester waste stream is recycled polyethylene terephthalate and both steps (a) and (b) are conducted in the absence of a catalyst.

7. A method according to claim 6 characterised in that the mole ratio of the reactants polyethylene terephthalate scrap: dibasic acid waste: alkylene glycol is substantially 1:1:2.

8. A method according to claim 6 or 7 characterised in that steps (a) and (b) are conducted at a temperature from 140 to 220°C.

9. A method according to any of claims 1 to 8 characterised in that the waste dibasic acid stream comprises each of glutaric acid, succinic acid and adipic acid.

10. A method of producing a rigid polyurethane foam obtained by reacting an organic polyisocyanate and a polyol in the presence of a blowing agent and a catalyst of polyurethane formation characterised in that the polyol comprises a mixture of aromatic polyols according to any of claims 1 to 9.

11. A method or producing a rigid polyisocyanurate foam by reacting organic polyisocyanate and a polyol in the presence of a blowing agent and a trimerization catalyst of polyisocyanurate formation, characterised in that the polyol comprises a mixture of aromatic polyols according to any of claims 1 to 9.

12. A method according to claim 10 or 11 characterised in that the polyol is a blend of
    a) from 5 to 100% by weight of the mixture of aromatic polyols according to any of claims 1 to 9, and
    b) from 95 to 0% by weight of a nitrogen-containing polyol obtained by
    1) reacting 1 mole of phenol or nonylphenol with 1 to 2 moles of diethanolamine, to give a Mannich reaction product, and
    2) subsequently reacting 1 mole of the Mannich reaction product with 2 to 3 moles of propylene oxide.

13. A method according to claim 12 characterised in that the mixture of aromatic polyols (a) has an average hydroxyl number from 100 to 400.

## Patentansprüche

1. Verfahren zur Herstellung eines Gemisches aromatischer Polyole mit Hydroxyl- und Ester-Funktionen, **dadurch gekennzeichnet,** daß
   a) ein dibasischer Säure-Abfallstrom umfassend mindestens eine Säure ausgewählt aus Glutarsäure,

Bernsteinsäure oder Adipinsäure, wobei dieser Strom auch Salpetersäure, Kupfer und Vanadium als Verunreinigungen aufweist, mit einem Alkylenglykol unter Bildung eines Polyesterpolyols verestert wird, und
b) ein Terephthalsäureester-Abfallstrom mit dem Polyesterpolyol-Reaktionsproduct des vorhergehenden Verfahrensschritts umgeestert wird.

2. Verfahren nach Anspruch 1, **dadurch gekennzeichnet,** daß die Umsetzungen bei einer Temperatur von 160 bis 240°C und einem Druck bis zu 1 bar durchgeführt werden.

3. Verfahren nach Anspruch 1 oder 2, **dadurch gekennzeichnet,** daß der Terephthalsäureester-Abfallstrom ein Rückstand aus der Herstellung von Dimethylterephthalat ist.

4. Verfahren nach Anspruch 3, **dadurch gekennzeichnet,** daß der Dimethylterephthalat-Rückstand Dimethylterephthalat und ein oder mehrere Nebenproduckte von substituierten Benzolen, Polycarbomethoxydiphenylen, Benzylestern der Toluat-Familie, Dicarbomethoxyfluorenon, Carbomethoxybenzocumarine und Carbomethoxypolyphenyle sind.

5. Verfahren nach Anspruch 1 oder 2, **dadurch gekennzeichnet,** daß der Terephthalsäureester-Abfallstrom ein Rückstand aus der Herstellung von Polyethylenterephthalat ist.

6. Verfahren nach Anspruch 1, **dadurch gekennzeichnet,** daß der Terephthalatsäureester-Abfallstrom rückgeführtes Polyethylenterephthalat ist und beide Verfahrensschritte (a) und (b) in Abwesenheit eines Katalysators durchgeführt werden.

7. Verfahren nach Anspruch 6, **dadurch gekennzeichnet,** daß das Molverhältnis der Reaktionskomponenten Polyethylenterephthalat-Abfallmaterial: Rückstand aus der Herstellung dibasischer Säuren:Alkylenglykol im wesentlichen 1:1:2 beträgt.

8. Verfahren nach Anspruch 6 oder 7, **dadurch gekennzeichnet,** daß die Verfahrensschritte (a) und (b) bei einer Temperatur von 140 bis 220°C durchgeführt werden.

9. Verfahren nach einem der Ansprüche 1 bis 8, **dadurch gekenn- zeichnet,** daß der dibasischer Säure-Abfallstrom jede der Säuren Glutarsäure, Bernsteinsäure und Adipinsäure umfaßt.

10. Verfahren zur Herstellung eines Polyurethan-Hartschaums erhalten durch die Umsetzung eines organischen Polyisocyanats und eines Polyols in Gegenwart eines Blähmittels und eines Katalysators zur Polyurethan-Bildung, **dadurch gekennzeichnet,** daß das Polyol ein Gemisch von aromatischen Polyolen nach einem der Ansprüche 1 bis 9 enthält.

11. Verfahren zur Herstellung eines Polyisocyanurat-Hartschaumes erhalten durch Umsetzung eines organischen Polyisocyanats und eines Polyols in Gegenwart eines Blähmittels und eines Trimerisations-Katalysators zur Polyisocyanurat-Bildung, **dadurch gekennzeichnet,** daß das Polyol ein Gemisch von aromatischen Polyolen nach einem der Ansprüche 1 bis 9 umfaßt.

12. Verfahren nach Anspruch 10 oder 11, **dadurch gekennzeichnet,** daß das Polyol ein Gemisch ist aus
(a) 5 bis 100 Gew.% eines Gemisches aromatischer Polyole nach einem der Ansprüche 1 bis 9, und
(b) 95 bis 0 Gew.% eines Stickstoff-enthaltenden Polyols, erhalten durch
1) Umsetzung von 1 Mol Phenol oder Nonylphenol mit 1 bis 2 Molen Diethanolamin unter Bildung eines Mannich-Produktes, und
2) anschließende Umsetzung von 1 Mol des Mannich-Produktes mit 2 bis 3 Molen Propylenoxid.

13. Verfahren nach Anspruch 12, **dadurch gekennzeichnet,** daß das Gemisch von aromatischen Polyolen (a) eine durchschnittliche Hydroxyl-Zahl von 100 bis 400 aufweist.

## Revendications

1. Procédé de préparation d'un mélange de polyols aromotiques ayant des fonctionnalités hydroxyle et ester caractérisées en ce que :
a) le courant résiduaire de diacides qui comprend au moins un acide choisi parmi l'acide glutarique,

l'acide succinique ou l'acide adipique, ledit courant contenant également l'acide nitrique, le cuivre et le vanadium en tant qu'impuretés est estérifié avec un alkylène glycol, pour produire un polyester polyol, et
b) un courant résiduaire d'ester teréphtalique est transestérifié avec le polyester polyol obtenu comme produit de la réaction de l'étape précédente.

**2.** Procédé suivant la revendication 1, caractérisé en ce que les réactions sont effectuées à une température de 160 à 240°C et sous une pression allant jusqu'à 1 bar.

**3.** Procédé suivant la revendication 1 ou 2, caractérisé en ce que le courant résiduaire d'ester téréphtalique est un résidu de la fabrication du téréphtalate de diméthyle.

**4.** Procédé suivant la revendication 3, caractérisé en ce que le résidu de téréphtalate de diméthyle contient du téréphtalate de diméthyle et un ou plusieurs sousproduits de benzènes substitués, de polycarbométhoxydiphényles, d'esters benzyliques de la famille des toluates, de dicarbométhoxyfluorénone, de carbométhoxybenzocoumarines et de carbométhoxy polyphényles.

**5.** Procédé suivant la revendication 1 ou 2, caractérisé en ce que le courant résiduaire d'ester téréphtatique est un résidu de la préparation du polyéthylène téréphtalate.

**6.** Procédé suivant la revendication 1, caractérisé en ce que le courant résiduaire d'ester téréphtalique est du polyéthylène téréphtalate recyclé et en ce que les deux étapes a) et b) sont effectuées en l'absence de catalyseur.

**7.** Procédé suivant la revendication 6, caractérisé en ce que le rapport molaire des réactifs déchets de polyéthylène téréphtalate : résidus de diacide : alkylène glycol est pratiquement égal à 1:1:2.

**8.** Procédé suivant la revendication 6, ou 7, caractérisé en ce que les étapes a) et b) sont effectuées à une température de 140 à 220°C.

**9.** Procédé suivant l'une quelconque des revendications 1 à 8, caractérisé en ce que le courant résiduaire de diacide comprend de l 'acide glutarique, de l'acide succinique et de l'acide adipique.

**10.** Procedé de préparation d'une mousse de polyuréthane rigide obtenue en faisant réagir un polyisocyanate organique et un polyol en présence d'un agent d'expansion et d'un catalyseur de formation de polyuréthane, caractérisé en ce que le polyol comprend un mélange de polyols aromatiques suivant l'une quelconque des revendications 1 à 9.

**11.** Procédé de préparation d'une mousse de polyisocyanurate rigide en faisant réagir un polyisocyanate organique et un polyol en présence d'un agent d'expansion et d'un catalyseur de trimérisation de formation de polyisocyanurate, caractérisé en ce que le polyol comprend un mélange de polyols aromatiques suivant l'une quelconque des revendiations 1 à 9.

**12.** Procédé suivant la revendication 10 ou 11, caractérisé en ce que le polyol est un mélange :
a) de 5 à 100 % en poids du mélange de polyols aromatiques, suivant l'une quelconque des revendications 1 à 9, et
b) de 95 à 0% en poids d'un polyol azoté obtenu
1) en faisant réagir 1 mole de phénol ou de nonylphénol avec 1 à 2 moles de diéthanolamine, pour donner un produit de la réaction de Mannich, et
2) en faisant réagir ensuite 1 mole du produit de la réaction de Mannich avec 2 à 3 moles d'oxyde de propylène.

**13.** Procédé suivant la revendication 12, caractérisé ce que Le mélange de polyols aromatiques a) a un indice d'hydroxyle moyen de 100 à 400.